# FASCICULE DE BREVET EUROPEEN

(11) **EP 1 369 670 B1**
(45) Date de publication et mention de la délivrance du brevet: **30.08.2006**
(21) Numéro de dépôt: 03291072.1
(22) Date de dépôt: 05.05.2003
(51) Int. Cl.: G01C 23/00

(54) **Dispositif d'aide au repérage visuel d'un aéronef en vol**
Vorrichtung zur Unterstützung der visuellen Postionsbestimmung eines Flugzeuges während des Fluges
Device for assisting in visually locating an airplane during flight

(30) Priorité: 03.06.2002 FR 0206784
(43) Date de publication de la demande: 10.12.2003
(73) Titulaire: AIRBUS France, 31060 Toulouse (FR)
(72) Inventeur: Vial, Jean-Sébastien, 31770 Colomiers (FR)
(74) Mandataire: Bonnetat, Christian

(56) Documents cités:
- EP-A- 0 405 430
- US-B1- 6 348 877

## Description

La présente invention a pour objet un dispositif d'aide au repérage visuel d'un aéronef en vol --désigné ci-après par "aéronef recherché"-- par le pilote d'un autre aéronef scrutant, également en vol, le ciel à travers la verrière de la cabine de pilotage de cet autre aéronef - désigné ci-après par "aéronef chercheur".

On sait que, lors des phases d'approche d'un aéroport (approches initiale, intermédiaire et finale, et atterrissage), un contrôleur aérien demande parfois au pilote d'un premier aéronef - l'aéronef chercheur - s'il voit dans son champ de vision un second aéronef - l'aéronef recherché. Dans l'affirmative, il peut alors lui demander de voler à vue en suivant cet aéronef recherché sans le dépasser. Ainsi, l'aéronef chercheur se raccroche en quelque sorte à l'aéronef recherché de telle façon que le contrôleur aérien n'a alors plus besoin de s'occuper de cet aéronef chercheur. En diminuant la charge de travail du contrôleur aérien, une telle procédure, dite de "séparation visuelle", permet d'accroître le nombre d'aéronefs que celui-ci peut gérer simultanément et par conséquent d'augmenter le volume du trafic aérien. De façon similaire, en phase de route, un contrôleur aérien peut demander au pilote d'un aéronef de se "raccrocher visuellement" à un autre aéronef. Le contrôleur peut ainsi constituer un groupe de plusieurs aéronefs qu'il peut alors gérer comme une seule entité.

Ce type de procédure présente toutefois un inconvénient relatif à la difficulté pour le pilote de l'aéronef chercheur de localiser sans risque d'erreur la position de l'aéronef recherché dans son champ de vision. En effet, des causes multiples peuvent gêner ce pilote pour localiser cet aéronef recherché. Il peut être gêné par des phénomènes météorologiques, tels que éblouissement par le soleil, présence de nuages, etc... et aussi être confronté à un risque de confusion si plusieurs aéronefs sont présents dans son champ de vision, notamment si ceux-ci sont proches les uns des autres selon l'angle de vue du pilote.

On remarquera que le document américain US-6 348 877 décrit un système d'aide au repérage visuel d'un aéronef recherché par le pilote d'un aéronef chercheur, ce système affichant sur la verrière de ce dernier aéronef un symbole en alignement avec ledit aéronef recherché. Cependant, il est bien évident que ce système ne peut remédier aux phénomènes météorologiques et au risque de confusion mentionnés ci-dessus.

Par ailleurs, on sait que, sur les avions de transport civil modernes, le pilote dispose d'un afficheur, communément appelé afficheur ND (Navigation Display) sur lequel le trafic environnant peut être représenté selon différents modes possibles, à partir d'informations calculées par son système TCAS (Traffic Collision Avoidance System), ou émises par le contrôle aérien ou par les autres avions. Toutefois, ces différents modes d'affichage correspondent généralement à une représentation cartographique en "vue de dessus" dudit trafic, donc dans un plan sensiblement orthogonal au plan du champ de vision dudit pilote à travers la verrière. Ils ne permettent donc pas au pilote d'appréhender directement, de façon réaliste, la position d'un avion dans son champ de vision naturel. Par conséquent, ce type d'afficheur ne résout pas directement le problème existant, c'est-à-dire consistant à montrer au pilote la localisation d'un aéronef dans son champ de vision. Lorsque, de façon exceptionnelle, comme décrit dans le document EP-O 405 430, ledit afficheur ND est disposé de façon semblable à la verrière pour éviter les inconvénients d'une représentation cartographique en "vue de dessus", la totalité du trafic aérien environnant est affiché sur ledit afficheur, de sorte que le pilote de l'aéronef chercheur peut être confronté au risque de confusion signalé ci-dessus.

Le document US 6 348 877 B1 décrit un dispositif d'aide au repérage visuel d'un aéronef en vol.

En conséquence, l'objet de la présente invention est de remédier à cet inconvénient en permettant au pilote d'un aéronef de localiser et d'identifier aisément et sûrement un autre aéronef évoluant dans son domaine visible.

A cette fin, selon l'invention, le dispositif d'aide au repérage visuel d'un aéronef en vol, appelé aéronef recherché, par le pilote d'un autre aéronef scrutant le ciel à travers la verrière de la cabine de pilotage de cet autre aéronef, appelé aéronef chercheur, ledit dispositif étant disposé à bord de ladite cabine de pilotage de l'aéronef chercheur et comportant :
- un dispositif d'affichage au moins approximativement vertical ;
- des moyens de communication avec l'extérieur permettant audit aéronef chercheur de recevoir des informations de position concernant ledit aéronef recherché ; et
- des moyens recevant lesdites informations de position et aptes à afficher sur ledit dispositif d'affichage un symbole, qui est représentatif dudit aéronef recherché,
est remarquable en ce qu'il comporte des moyens pour afficher sur ledit dispositif d'affichage une représentation de ladite verrière dudit aéronef chercheur et en ce que la position dudit symbole en superposition sur ladite représentation de la verrière correspond à celle qu'occupe ledit aéronef recherché dans le champ de vision dudit pilote, à travers ladite verrière dudit aéronef chercheur.

Ainsi, le dispositif conforme à la présente invention indique, sur son dispositif d'affichage, la position d'un autre aéronef environnant, tel qu'il apparaît dans le champ de vision du pilote, à travers la verrière de la cabine de pilotage. Le pilote peut donc, par rapprochement de ce qu'il voit à travers la verrière et de l'image affichée par le dispositif d'affichage, localiser aisément et à coup sûr l'aéronef recherché qui lui est désigné par l'installation de contrôle aérien. Le dispositif selon la présente invention est donc particulièrement adapté au vol groupé de plusieurs aéronefs dans les phases en route (fin de montée, croisière, début de descente) ou au suivi visuel d'un autre aéronef par le pilote d'un aéronef lors d'une phase d'approche d'un aéroport.

De préférence, lesdits moyens affichant une représentation de la verrière comportent une première mémoire stockant des informations représentant les éléments fixes de la cabine de pilotage de l'aéronef chercheur présents dans le champ de vision du pilote, lesdits moyens affichant ledit symbole représentatif de l'aéronef recherché comportent une seconde mémoire dans laquelle sont stockées lesdites informations de position et lesdits moyens affichant une représentation de la verrière et lesdits moyens affichant ledit symbole comportent, en commun, une unité de calcul combinant les informations desdites première et seconde mémoires pour les afficher sur ledit dispositif d'affichage

Afin de faciliter le travail du pilote, il est avantageux que, sur ledit dispositif d'affichage, apparaissent, outre la représentation de ladite verrière et ledit symbole de l'aéronef recherché, un axe horizontal et un axe vertical, dont l'intersection est représentative de la position dudit aéronef chercheur sur ledit dispositif d'affichage.

Dans un mode de réalisation avantageux, lesdits moyens de communication permettent de relier ledit aéronef chercheur, non seulement à une installation de contrôle aérien, mais également audit aéronef recherché. Ainsi, le dispositif selon l'invention peut recevoir des informations de position de l'autre aéronef recherché par deux sources différentes.

De préférence, lesdits moyens de communication sont aptes à transmettre un message dudit pilote de l'aéronef chercheur vers ladite installation de contrôle aérien. Ainsi, ce pilote peut confirmer à cette dernière qu'il a bien identifié l'aéronef qu'on lui a demandé de suivre.

Les figures du dessin annexé feront bien comprendre comment l'invention peut être réalisée. Sur ces figures, des références identiques désignent des éléments semblables.

La figure 1 est le schéma synoptique d'un exemple de réalisation du dispositif conforme à la présente invention.

La figure 2 montre, à plus grande échelle, l'écran du dispositif d'affichage du dispositif de la figure 1.

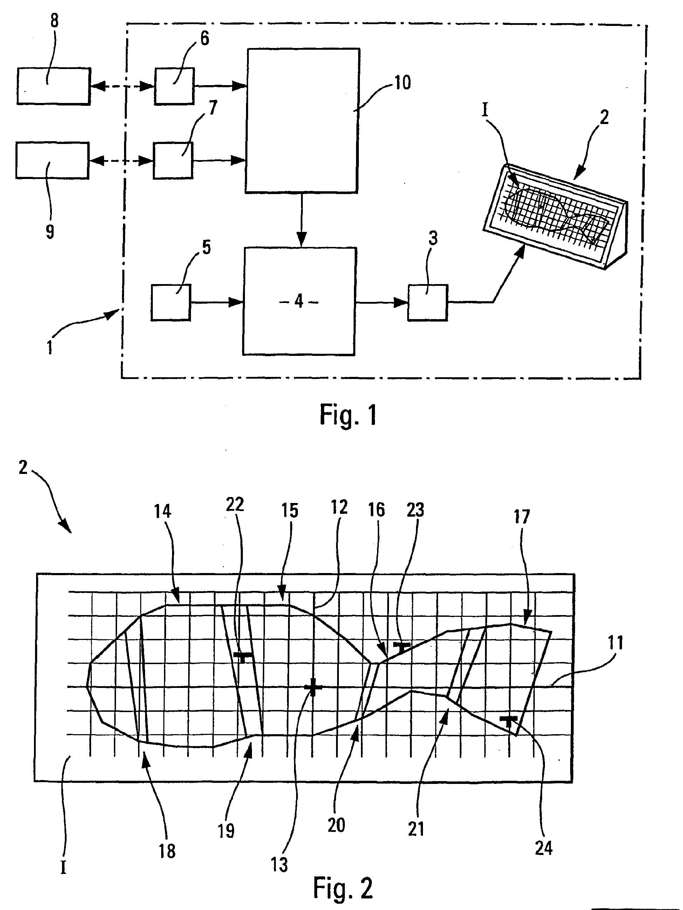

L'exemple de réalisation 1 du dispositif, conforme à la présente invention et représenté schématiquement sur la figure 1, est disposé à bord d'un aéronef chercheur (non représenté) et il comporte un afficheur 2, sensiblement vertical ou peu incliné sur la verticale, disposé devant le pilote (non représenté) dudit aéronef chercheur. L'affichage d'images sur ledit afficheur 2 est commandé par un dispositif de commande 3, relié à la sortie d'une unité de calcul 4.

Cette unité de calcul 4 est en liaison avec une première mémoire 5, dans laquelle sont stockées des informations sur la représentation des éléments fixes de la cabine de pilotage de l'aéronef chercheur présents dans le champ de vision du pilote, tels que glaces de la verrière, encadrements desdites glaces, certains instruments de navigation, certains écrans d'affichage, etc...

Par ailleurs, le dispositif 1 comporte des moyens de communication 6, 7 lui permettant de communiquer avec des dispositifs 8, 9 extérieurs audit aéronef chercheur aptes à lui fournir des informations sur les autres aéronefs évoluant dans l'environnement et visibles pour ledit pilote dudit aéronef chercheur. De telles informations sont, par exemple, la position, le cap, l'attitude, la vitesse, le type d'aéronef, l'identification desdits aéronefs, etc... Ces dernières informations sont adressées, par lesdits moyens de communication 6, 7, à une seconde mémoire 10 et rangées dans celle-ci de façon que, à chaque instant, le contenu de cette mémoire 10 soit représentatif de la situation desdits aéronefs environnants, évoluant dans l'environnement de l'aéronef chercheur à bord duquel est monté le dispositif 1. La seconde mémoire 10, tout comme la première mémoire 5, est en liaison avec l'unité de calcul 4.

Ainsi, ladite unité de calcul 4 :
- lit de façon cyclique le contenu de la mémoire 10 et, à partir des informations de ce contenu, calcule les positions desdits aéronefs environnants se trouvant dans le champ de vision du pilote ; et
- lit le contenu de la mémoire 5 et les combine avec lesdites positions calculées desdits aéronefs environnants, pour calculer des informations d'image représentatives des positions desdits aéronefs environnants dans le champ de vision du pilote, à chaque instant.

L'unité de calcul 4 adresse lesdites informations d'image au dispositif de commande 3, qui les affiche sur l'afficheur 2. Ainsi, celui-ci peut afficher une image représentant, à l'instant considéré, le champ de vision du pilote avec des symboles, représentatifs desdits aéronefs environnants et disposés, dans ladite image du champ de vision, aux positions respectives qu'occupent lesdits aéronefs environnants dans le champ de vision réel du pilote, c'est-à-dire tels que les voit ledit pilote de l'aéronef chercheur à travers la verrière de la cabine de pilotage.

Sur la figure 2, on a représenté un exemple d'image I apparaissant sur ledit afficheur 2. Cette image I est rapportée à un système d'axes rectangulaires, par exemple gradués en degrés d'angle, comprenant un axe horizontal 11 et un axe vertical 12, dont le croisement 13 (origine dudit système d'axes) symbolise la position de l'aéronef chercheur à bord duquel est monté le dispositif 1.

L'image I comporte l'image de la verrière de l'aéronef chercheur, telle qu'elle apparaît dans le champ de vision du pilote, avec par exemple les images 14 à 17, respectivement, de la vitre latérale du pilote, de la vitre frontale du pilote, de la vitre frontale du copilote et de la vitre latérale 17 du copilote, ainsi qu'avec les images 18 à 21 des montants de la verrière séparant lesdites vitres. L'image I comporte, de plus, des symboles 22, 23 et 24, représentatifs de trois aéronefs environnants, les positions desdits symboles 22, 23 et 24 dans le système d'axes 11, 12 correspondant respectivement aux positions desdits aéronefs environnants dans le champ de vision du pilote, à travers la verrière.

Chacun desdits symboles 22, 23, 24 associés à des aéronefs environnants peut être :
- représentatif de la nature de l'aéronef environnant correspondant et être différent suivant que cet aéronef est un avion, un hélicoptère, un ballon, etc...
- représentatif de la marque, du type et/ou de la version dudit aéronef environnant, avec éventuellement indication du degré de turbulences qu'il engendre ;
- représentatif de la distance relative entre l'aéronef environnant concerné et l'aéronef à bord duquel se trouve le dispositif 1. Par exemple, la taille d'un symbole 22, 23, 24 peut varier en sens inverse de cette distance, en étant cependant constante dans certaines plages de distance, ladite taille variant lorsque ladite distance passe d'une plage à une autre ;
- représentatif de l'attitude de l'aéronef environnant, ce symbole pouvant être différent selon que ce dernier s'approche ou s'éloigne, monte ou descend, se déplace à gauche ou à droite, etc... ; et
- associé à des informations écrites, représentatives par exemple du numéro de vol de l'aéronef environnant concerné et de la compagnie à laquelle il appartient. Cependant, pour ne pas surcharger l'afficheur 2, ces informations écrites ne sont affichées que pour les aéronefs environnants répondant à un critère particulier, tel que, par exemple, une distance ou une altitude inférieure à un seuil prédéterminé.

Egalement afin de ne pas surcharger l'afficheur 2, le dispositif 1 peut comporter un dispositif de filtrage (non représenté) éliminant de l'affichage tout aéronef environnant dont la distance ou l'altitude est supérieure à un seuil prédéterminé.

L'afficheur 2 peut être spécifiquement prévu pour le dispositif 1. Cependant, il peut également appartenir à un autre système de l'aéronef, par exemple le dispositif ND mentionné ci-dessus. Dans ce dernier cas, il est nécessaire de prévoir une action volontaire de la part du pilote ou de l'un des dispositifs extérieurs 8, 9 pour séparer l'afficheur de cet autre système et l'associer au dispositif 1, afin qu'il puisse afficher les éléments 11 à 24. Une telle action volontaire peut être effectuée par l'intermédiaire d'un dispositif du type commutateur, soit directement, soit par l'intermédiaire de la console MCDU (Multipurpose Control and Display Unit) généralement prévue à bord des avions de transport civil. L'affichage des éléments 11 à 24 qui en résulte peut alors être permanent ou temporaire, pendant une durée suffisante pour que le pilote repère l'aéronef environnant recherché qu'il doit suivre. Cette opération de repérage peut d'ailleurs être facilitée du fait que le symbole 22 à 24, attaché à cet aéronef recherché, peut être rendu très distinctif, par exemple par clignotement, surbrillance, etc..., grâce à des instructions spéciales reçues de l'un ou l'autre des dispositifs extérieurs 8, 9 par l'intermédiaire des moyens de communication 6, 7.

Les moyens de communication 6 sont par exemple destinés à la liaison entre le dispositif 1 et une installation de contrôle aérien 8. Une telle liaison peut être analogique ou numérique. Elle permet à l'installation de contrôle aérien 8 de demander au pilote d'identifier et de suivre un aéronef recherché. De préférence, elle permet également au pilote de l'aéronef chercheur d'adresser à l'installation de contrôle aérien 8 un message d'acquittement pour signifier à cette dernière qu'il a bien identifié cet aéronef recherché.

Cet aéronef recherché peut, de façon connue, être équipé d'un transpondeur de type dit TIS/B, lui permettant d'adresser à l'installation de contrôle aérien au sol 8 des informations relatives à son altitude, son numéro de transpondeur, etc... Ces informations, ou tout au moins les plus pertinentes d'entre elles, augmentées d'informations de position calculées par un radar au sol, peuvent être renvoyées par l'installation de contrôle aérien 8 vers les aéronefs situés dans sa zone de couverture. Lorsque l'aéronef chercheur équipé du dispositif 1 se trouve dans cette zone de couverture, il peut ainsi recevoir, par l'intermédiaire des moyens de communication 6, des informations sur l'ensemble des aéronefs équipés d'un transpondeur TIS/B évoluant dans ladite zone de couverture.

Par ailleurs, on sait que certains aéronefs 9 sont équipés d'un émetteur dit ADS/B (Automatic Dépendent Surveillance - Broadcast) diffusant des informations concernant leur position, leur vitesse, leur identification, etc... vers l'installation de contrôle aérien 8, ainsi que vers les autres avions. Ainsi, l'avion chercheur porteur du dispositif 1 peut recevoir directement d'un tel aéronef 9, par l'intermédiaire des moyens de communication 7, les informations émises par l'émetteur ADS/B de celui-ci.

Il est bien entendu avantageux que le dispositif 1 reçoive, par les moyens de communication 6, des informations de type TIS/B et, par les moyens de communication 7, des informations de type ADS/B.

## Revendications

1. Dispositif (1) d'aide au repérage visuel d'un aéronef en vol, appelé aéronef recherché, par le pilote d'un autre aéronef scrutant le ciel à travers la verrière de la cabine de pilotage de cet autre aéronef, appelé aéronef chercheur, ledit dispositif étant disposé à bord de ladite cabine de pilotage de l'aéronef chercheur et comportant :
- un dispositif d'affichage (2) ;
- des moyens de communication (6, 7) avec l'extérieur permettant audit aéronef chercheur de recevoir des informations de position concernant ledit aéronef recherché ; et
- des moyens (3, 4, 10) recevant lesdites informations de position et aptes à afficher sur ledit dispositif d'affichage (2) un symbole (22; 23, 24), qui est représentatif dudit aéronef recherché,
**caractérisé en ce que** :
- ledit dispositif d'affichage (2) est au moins approximativement vertical ;
- des moyens (3, 4, 5) sont prévus pour afficher sur ledit dispositif d'affichage (2) une représentation (14 à 21) de ladite verrière dudit aéronef chercheur ; et
- sur ledit dispositif d'affichage (2), la position dudit symbole (22, 23, 24) en superposition sur ladite représentation (14 à 21) de la verrière correspond à celle qu'occupe ledit aéronef recherché dans le champ de vision dudit pilote, à travers ladite verrière dudit aéronef chercheur.

2. Dispositif selon la revendication 1,
**caractérisé en ce que** lesdits moyens (3, 4, 5) affichant une représentation de la verrière comportent une première mémoire (5) stockant des informations représentant les éléments fixes de la cabine de pilotage de l'aéronef chercheur présents dans le champ de vision du pilote, **en ce que** lesdits moyens (3, 4, 10) affichant ledit symbole (22, 23, 24) représentatif de l'aéronef recherché comportent une seconde mémoire (10) dans laquelle sont stockées lesdites informations de position et **en ce que** lesdits moyens affichant une représentation de la verrière et lesdits moyens affichant ledit symbole comportent, en commun, une unité de calcul (4) combinant les informations desdites première et seconde mémoires (5, 10) pour les afficher sur ledit dispositif d'affichage (2).

3. Dispositif selon la revendication 1 ou 2,
**caractérisé en ce que**, sur ledit dispositif d'affichage (2), apparaissent outre la représentation (14 à 21) de ladite verrière et ledit symbole (22, 23, 24) de l'aéronef recherché, un axe horizontal (11) et un axe vertical (12), dont l'intersection (13) est représentative de la position dudit aéronef chercheur sur ledit dispositif d'affichage.

4. Dispositif selon l'une des revendications 1 à 3,
**caractérisé en ce que** lesdits moyens de communication (6) relient ledit dispositif (1) à une installation de contrôle aérien (8).

5. Dispositif selon l'une des revendications 1 ou 4,
**caractérisé en ce que** lesdits moyens de communication (7) relient ledit dispositif (1) audit aéronef recherché (9).

6. Dispositif selon la revendication 4,
**caractérisé en ce que** lesdits moyens de communication (6) sont aptes à transmettre un message dudit pilote vers ladite installation de contrôle aérien (8).

## Claims

1. Device (1) for aiding the visual spotting of an aircraft in flight, called the sought aircraft, by the pilot of another aircraft scanning the sky through the canopy of the cockpit of this other aircraft, called the seeker aircraft, said device being disposed on board said cockpit of the seeker aircraft and comprising:
- a display device (2);
- means (6, 7) of communication with the outside allowing said seeker aircraft to receive position information relating to said sought aircraft; and
- means (3, 4, 10) receiving said position information and able to display on said display device (2) a symbol (22, 23, 24), which is representative of said sought aircraft,
**characterized in that**:
- said display device (2) is at least approximately vertical ;
- means (3, 4, 5) are provided for displaying on said display device (2) a representation (14 to 21) of said canopy of said seeker aircraft ; and
- on said display device (2), the position of said symbol (22, 23, 24) superimposed on said representation (14 to 21) of the canopy corresponds to that occupied by said sought aircraft in the field of view of said pilot, through said canopy of said seeker aircraft.

2. Device as claimed in claim 1,
**characterized in that** said means (3, 4, 5) displaying a representation of the canopy comprise a first memory (5) storing information representing the fixed elements of the cockpit of the seeker aircraft which are present in the field of view of the pilot, wherein said means (3, 4, 10) displaying said symbol (22, 23, 24) representative of the sought aircraft comprise a second memory (10) in which are stored said position information and wherein said means displaying a representation of the canopy and said means displaying said symbol comprise, in common, a computing unit (4) combining the information from said first and second memories (5, 10) so as to display said information on said display device (2).

3. Device as claimed in claim 1 or claim 2,
**characterized in that** a horizontal axis (11) and a vertical axis (12), whose intersection (13) is representative of the position of said seeker aircraft on said display device, appear on said display device (2), in addition to the representation (14 to 21) of said canopy and said symbol (22, 23, 24) of the sought aircraft.

4. Device as claimed in one of claims 1 to 3,
**characterized in that** said means of communication (6) link said device (1) to an air traffic control installation (8).

5. Device as claimed in one of claims 1 to 4,
**characterized in that** said means of communication (7) link said device (1) to said sought aircraft (9).

6. Device as claimed in claim 4,
**characterized in that** said means of communication (6) are able to transmit a message from said pilot to said air traffic control installation (8).

## Patentansprüche

1. Vorrichtung (1) zur Unterstützung der visuellen Positionsbestimmung eines Flugzeugs während des Fluges, gesuchtes Flugzeug genannt, durch den Piloten eines anderen Flugzeugs, der den Himmel durch das Fenster der Pilotenkanzel dieses anderen Flugzeugs, suchendes Flugzeug genannt, absucht, wobei die Vorrichtung an Bord der Pilotenkanzel des suchenden Flugzeugs angeordnet ist und umfasst:
- eine Anzeigeeinrichtung (2);
- Kommunikationsmittel (6, 7) mit der Umwelt, die dem suchenden Flugzeug ermöglichen, Informationen über die Position betreffend das gesuchte Flugzeug zu empfangen; und
- Mittel (3, 4, 10), welche die Informationen über die Position empfangen und ausgebildet sind, auf der Anzeigeeinrichtung (2) ein Symbol (22, 23, 24) anzuzeigen, das für das gesuchte Flugzeuge repräsentativ ist,
**dadurch gekennzeichnet, dass**:
- die Anzeigeeinrichtung (2) wenigstens in etwa vertikal ist;
- Mittel (3, 4, 5) vorgesehen sind, um auf der Anzeigeeinrichtung (2) eine Darstellung (14 bis 21) des Fensters des suchenden Flugzeugs anzuzeigen; und
- auf der Anzeigeeinrichtung (2) die Position des Symbols (22, 23, 24) in Überlagerung der Darstellung (14 bis 21) des Fensters derjenigen entspricht, die das gesuchte Flugzeug im Blickfeld des Piloten aus dem Fenster des suchenden Flugzeugs einnimmt.

2. Vorrichtung nach Anspruch 1, **dadurch gekennzeichnet, dass** die Mittel (3, 4, 5), welche die Darstellung des Fensters anzeigen, einen ersten Speicher (5) umfassen, der die Informationen, welche die festen Elemente der Pilotenkanzel des suchenden Flugzeugs wiedergeben, die im Blickfeld des Piloten präsent sind, speichern, dass die Mittel (3, 4, 10), welche das für das gesuchte Flugzeug repräsentative Symbol (22, 23, 24) anzeigen, einen zweiten Speicher (10) umfassen, in welchem die Informationen über die Position gespeichert sind, und dass die Mittel, welche einen Darstellung des Fensters anzeigen und die Mittel, welche das Symbol anzeigen, zusammen eine Rechnereinheit (4) umfassen, welche die Informationen des ersten und zweiten Speichers (5, 10) kombiniert, um diese auf der Anzeigeeinrichtung (2) anzuzeigen.

3. Vorrichtung nach Anspruch 1 oder 2, **dadurch gekennzeichnet, dass** auf der Anzeigeeinrichtung (2) außer der Darstellung (14 bis 21) des Fensters und des Symbols (22, 23, 24) des gesuchten Flugzeugs eine horizontale Achse (11) und eine vertikale Achse (12) erscheint, deren Schnittpunkt (13) für die Position des suchenden Flugzeugs auf der Anzeigeeinrichtung repräsentativ ist.

4. Vorrichtung nach einem der Ansprüche 1 bis 3, **dadurch gekennzeichnet, dass** die Kommunikationsmittel (6) die Vorrichtung (1) mit einer Luftkontrollstation (8) verbinden.

5. Vorrichtung nach einem der Ansprüche 1 bis 4, **dadurch gekennzeichnet, dass** die Kommunikationsmittel (7) die Vorrichtung (1) mit dem gesuchten Flugzeug (9) verbinden.

6. Vorrichtung nach Anspruch 4, **dadurch gekennzeichnet, dass** die Kommunikationsmittel (6) so ausgebildet sind, dass sie eine Mitteilung des Piloten an die Luftkontrollstation (8) übertragen.
